# EUROPÄISCHE PATENTSCHRIFT

(11) **EP 3 022 089 B1**
(45) Veröffentlichungstag und Bekanntmachung des Hinweises auf die Patenterteilung: **26.10.2022**
(21) Anmeldenummer: 14749702.8
(22) Anmeldetag: 15.07.2014
(51) Int. Cl.: B60Q 1/08, B60Q 1/12

(54) **DYNAMISCHE SICHTFELDAUSLEUCHTUNG**
DYNAMIC MEANS OF ILLUMINATING A FIELD OF VISION
ÉCLAIRAGE DYNAMIQUE D'UN CHAMP DE VISION

(30) Priorität: 16.07.2013 AT 504542013
(43) Veröffentlichungstag der Anmeldung: 25.05.2016
(73) Patentinhaber: ZKW Group GmbH, 3250 Wieselburg (AT)
(72) Erfinder: MAYER, Peter, A-3250 Wieselburg (AT)
(74) Vertreter: Patentanwaltskanzlei Matschnig & Forsthuber OG
(86) Internationale Anmeldenummer: PCT/AT2014/050157
(87) Internationale Veröffentlichungsnummer: WO 2015/006793

(56) Entgegenhaltungen:
- EP-A1- 2 127 944
- EP-A2- 1 506 893
- EP-A2- 2 384 932
- EP-A2- 2 700 536
- DE-A1-102005 036 002
- DE-A1-102007 060 399
- DE-A1-102009 048 619
- DE-A1-102012 103 293
- US-A1- 2008 101 077
- US-A1- 2009 016 073
- US-A1- 2012 206 050

## Beschreibung

Die Erfindung betrifft ein Verfahren zum Erzeugen einer adaptiven Lichtverteilung, die in einem von einem Fahrzeuglenker lenkbaren Fahrzeug von zumindest einem Fahrzeugscheinwerfer erzeugt wird, wobei der zumindest eine Fahrzeugscheinwerfer zumindest ein adaptives Beleuchtungsmittel aufweist.

Des Weiteren betrifft die Erfindung ein Beleuchtungssystem sowie ein Kraftfahrzeug mit diesem Beleuchtungssystem, zur Erzeugung einer adaptiven Lichtverteilung, die in einem von einem Fahrzeuglenker gelenkten Fahrzeug von zumindest einem Fahrzeugscheinwerfer erzeugt wird, wobei der zumindest eine Fahrzeugscheinwerfer zumindest ein adaptives Beleuchtungsmittel aufweist.

Kraftfahrzeuge mit adaptiven Beleuchtungsmitteln zur Erzeugung einer adaptiven Lichtverteilung sind bereits aus dem Stand der Technik bekannt geworden. So zeigt das Dokument EP 1 506 893 A2 ein Kraftfahrzeug, bei welchem eine ansteuerbare Leuchteinrichtung mit einer Einrichtung zur Umfelderfassung dergestalt zusammen wirkt, sodass im Umfeld befindliche Objekte individuell beleuchtet werden können. Der Begriff Umfeld bezieht sich dabei auf die Fahrzeugumgebung. Unbewegliche oder bewegliche Objekte wie beispielsweise Straßenbeschilderungselemente, Fußgänger, Fahrradfahrer oder Tiere können erfasst und individuell beleuchtet werden. Die Einrichtung zur Umfelderfassung agiert dabei unabhängig von dem Fahrzeuglenker. So ist es möglich, dass ein Fahrzeuglenker in einem unausgeleuchteten Bereich ein Objekt vermutet, die ansteuerbare Leuchteinrichtung allerdings ein anderes Objekt beleuchtet, sodass der Fahrzeuglenker in seiner Vermutung im Ungewissen bleibt. Häufig wird der Fahrzeuglenker in einer solchen Situation versuchen, die Blickrichtung beizubehalten, um das vermutete Objekt zu erkennen oder deren Anwesenheit ausschließen zu können. In einer solchen Situation wird die Aufmerksamkeit des Fahrzeuglenkers gebunden, wodurch einerseits die Gefahr einer Kollision mit dem unausgeleuchtet Objekt (beispielsweise ein im Buschwerk verdecktes Tier) nicht ausgeschlossen werden kann und andererseits die Gefahr einer Kollision mit anderen Objekten stark erhöht ist. Die Dokumente US 2009/016073 A1, DE 10 2009 048619 A1, DE 10 2005 036002 A1 und DE 10 2007 060399 A1 offenbaren ebenfalls Systeme zur Steuerung von Fahrzeugscheinwerfern zur Erzeugung einer adaptiven Lichtverteilung.

Es ist daher eine Aufgabe der Erfindung ein Verfahren zum Erzeugen einer adaptiven Lichtverteilung zu schaffen, bei welchem Informationen über den Fahrzeuglenker erfasst und bei der Auswahl der auszuleuchtenden Bereiche berücksichtigt werden. In einem ersten Aspekt der Erfindung wird diese Aufgabe mit einem Verfahren gemäß Anspruch 1 gelöst.

Die die Blickrichtung betreffende Information wird vorzugsweise von der Kamera selbständig an die Recheneinheit geleitet. Alternativ dazu könnte auch die Recheneinheit diese Information selbständig abrufen. Durch das erfindungsgemäße Verfahren ist es möglich Informationen über den Fahrzeuglenker zu erfassen, auszuwerten und sinnvoll in eine gezielte Ausleuchtung von Objekten und/oder Bereichen einfließen zu lassen. Die Wahrnehmung des Fahrzeuglenkers kann damit entscheidend verbessert und somit die Verkehrssicherheit erhöht werden.

Als Kamera kann eine beliebige Überwachungsvorrichtung vorgesehen sein, die geeignet ist optische Signale zu erfassen. Beispielsweise können aus dem Stand der Technik bekannte Müdigkeitserkennungssysteme zu diesem Zweck modifiziert werden, welche mit zumindest einer Kamera ausgestattet sind und mithilfe einer optischen Überwachung des Fahrzeuglenkers, insbesondere der Augen, Ermüdungserscheinungen erkennen. Das erfindungsgemäße Verfahren ist somit unter besonders geringem Aufwand durchführbar sowie mit bestehender Hardware umsetzbar und kann mit anderen Fahrzeugassistenzsystemen in einfacher Weise kombiniert werden. Auch können zwei oder mehrere Kameras vorgesehen sein, die gemeinsam die Blickrichtung erfassen. Unter dem Begriff "Steuern" kann im Rahmen dieser Schrift sowohl ein Steuerungs- als auch ein Regelungsverhalten verstanden werden. Der Begriff "Steuern" ist daher nicht als einschränkend (im Sinne der Steuerungs- und Regelungstechnik) aufzufassen. Ebenso ist der Ausdruck "Information" nicht einschränkend auszulegen und kann auch mehrere Informationen umfassen. Die die Blickrichtung betreffende Information kann darüber hinaus für weitere Zwecke ausgewertet und eingesetzt werden. So kann ebenso eine augengesteuerte Bedienung von im Fahrzeug befindlichen Elementen, wie beispielsweise von Bedienungselementen eines Radios, eines Navigationssystems, einer Klimaanlage usw. realisiert werden. Die durch das erfindungsgemäße Verfahren erzeugte "adaptive Lichtverteilung" bewirkt eine dynamische Sichtfeldausleuchtung, welche der Blickrichtung des Fahrzeuglenkers dynamisch folgen kann.

In einer vorteilhaften Ausführungsform des erfindungsgemäßen Verfahrens ist vorgesehen, dass die adaptive Lichtverteilung durch eine horizontale und/oder vertikale Segmentierung des Lichtbildes des zumindest einen Beleuchtungsmittels erzeugt wird. Diese Segmentierung kann beispielsweise bei Laserscheinwerfern durch die Ausrichtung eines einen Lichtstrahl reflektierenden und ausrichtenden Spiegels bzw. bei Matrix- oder Pixelscheinwerfern durch aktivieren einzelner Lichtquellen, denen einzelne Segmente des Lichtbildes zugeordnet sind, erfolgen.

Gemäß einer Weiterbildung des erfindungsgemäßen Verfahrens wird die adaptive Lichtverteilung aus den Lichtbildern zweier Fahrzeugscheinwerfer, die jeweils zumindest ein adaptives Beleuchtungsmittel aufweisen, zusammengesetzt. Bei den Fahrzeugscheinwerfern kann es sich beispielsweise um die Frontscheinwerfer handeln. Besonders vorteilhaft ist es dabei, wenn ein im Fahrzeugscheinwerfer bereits vorhandenes adaptives Beleuchtungsmittel zusätzlich durch die Recheneinheit zur gezielten Ausleuchtung des in Blickrichtung des Fahrzeuglenkers liegenden Bereichs angesteuert wird. So kann ein einziges in einem Fahrzeugscheinwerfer vorgesehenes adaptives Beleuchtungsmittel zur Erzeugung einer herkömmlichen sowie einer adaptiven Lichtverteilung herangezogen werden. Eine solche Variante ist besonders kosteneffizient. Die adaptive Lichtverteilung entsteht dabei durch Zusammensetzen, also einer Überlagerung bzw. einer Superposition, der Lichtbilder, die durch jeweils einen Fahrzeugscheinwerfer erzeugt werden. In einer alternativen Variante kann auch lediglich ein Fahrzeugscheinwerfer mit einem adaptiven Beleuchtungsmittel ausgestattet sein.

Um eine besonders günstige Ausgestaltung der adaptiven Lichtverteilung zu erreichen, ist in einer besonders effizienten Variante des erfindungsgemäßen Verfahrens vorgesehen, dass die adaptive Lichtverteilung aus den Lichtbildern zweier Fahrzeugscheinwerfer, die jeweils genau ein adaptives Beleuchtungsmittel aufweisen, zusammengesetzt wird So ist eine adaptive Lichtverteilung mittels zwei Frontscheinwerfern, die jeweils über ein adaptives Beleuchtungsmittel verfügen, besonders kostengünstig und effizient.

Eine besonders gezielte Ausleuchtung des in Blickrichtung des Fahrzeuglenkers liegenden Bereiches lässt durch eine Weiterbildung des erfindungsgemäßen Verfahrens erreichen, in welchem die adaptive Lichtverteilung durch zumindest zwei adaptive Beleuchtungsmittel erzeugt wird, die unabhängig voneinander gesteuert werden. So können die einzelnen adaptiven Beleuchtungsmittel unterschiedlich ausgerichtet werden, um beispielsweise deren Positionsunterschiede auszugleichen und den gewünschten Bereich besonders deutlich auszuleuchten. Eine besonders scharf abgegrenzte Ausleuchtung ist vor allem dann von Großer Bedeutung, wenn die Gefahr besteht, andere Verkehrsteilnehmer durch die adaptive Lichtverteilung zu blenden. Des Weiteren erlaubt eine unabhängige Steuerung der beiden adaptiven Beleuchtungsmittel auch bei Ausfall eines adaptiven Beleuchtungsmittels weiterhin die Erzeugung einer adaptiven Lichtverteilung durch das verbleibende adaptive Beleuchtungsmittel. Die Steuerung kann dabei entweder durch eine gemeinsame Recheneinheit oder auch durch zwei unabhängige Recheneinheiten realisiert werden, wodurch die Redundanz zusätzlich erhöht wird.

Gemäß einer vorteilhaften Ausführungsform des erfindungsgemäßen Verfahrens kann vorgesehen sein, dass die Fahrzeugumgebung von zumindest einer Kamera erfasst wird, und die zumindest eine Recheneinheit die so erhaltene Information auswertet und in der Fahrzeugumgebung befindliche Verkehrsteilnehmer erkennt und nach definierten Kriterien selektiert, wobei zumindest die gezielte Ausleuchtung der selektierten Verkehrsteilnehmer unterdrückt wird. Die Erfassung der Fahrzeugumgebung erfolgt dabei vorzugsweise durch eine zusätzliche Kamera, welche beispielsweise mit einer zusätzlichen Recheneinheit zur Auswertung der die Fahrzeugumgebung betreffenden Information verbunden sein kann. Die in der Fahrzeugumgebung befindlichen Verkehrsteilnehmer können mithilfe von bekannten Bildverarbeitungsalgorithmen erkannt werden. Die Selektion der Verkehrsteilnehmer kann dergestalt erfolgen, dass beispielsweise entgegenkommende Verkehrsteilnehmer erkannt und ausgeblendet werden. Als Kriterien können hierfür beispielsweise Bewegungen der erkannten Verkehrsteilnehmer und/oder Lage der Verkehrsteilnehmer (z.B. in einem in Bezug auf die Fahrtrichtung des Fahrzeugs linken Bildbereich oder einer linken Bildhälfte der mithilfe einer Kamera erfassten Fahrzeugumgebung) herangezogen werden.

Dabei ist es günstig, wenn einzelne Lichtfunktionen gemäß einer hierarchischen Rangordnung ausführbar sind. So kann es vorgesehen sein, dass das zumindest eine adaptive Beleuchtungsmittel mehrere Funktionen (z.B. Abblendlichtfunktion, Fernlichtfunktion und adaptive Lichtverteilungsfunktion) abbildet. So kann eine Grundlichtverteilung wie Abblendlicht und Fernlicht sowie ein blendfreies Fernlicht durch Rückdimmen beispielsweise einzelner Segmente einer Lichtverteilung realisiert werden. Ein durch das zumindest eine adaptive Beleuchtungsmittel erzeugte und in Blickrichtung des Fahrzeuglenkers leuchtender Lichtkegel kann vorzugsweise auf eine weitere Funktion einer einzigen Lichtquelle zurückzuführen sein. Um Kollisionen dieser unterschiedlichen Lichtfunktionen vorzubeugen ist eine hierarchische Rangordnung (sog. Priorisierung) der auszuleuchtenden und auszublendenden Bereiche günstig. Die höchste Priorität kann dabei der Abblendlichtfunktion zukommen. Die zweithöchste Priorität kann z.B. einer blendfreien Fernlichtfunkton zukommen, in der andere Verkehrsteilnehmer gezielt ausgeblendet werden können. Eine gezielte Ausleuchtung eines in Blickrichtung des Fahrzeuglenkers liegenden Bereiches kann hinsichtlich Ihrer Priorität niedriger als jene des blendfreien Fernlichts angeordnet sein. Damit kann eine Blendung des Gegenverkehrs durch eine Ausleuchtung des in Blickrichtung des Fahrzeuglenkers liegenden Bereichs vermieden werden.

Daher kann es vorteilhaft sein, wenn der Erzeugung einer Abblendlichtverteilung die höchste Priorität zukommt, gefolgt von einer Fernlichtverteilung und der Blickrichtungssteuerung. Gemäß der Erfindung ist vorgesehen, dass mittels der zumindest einen Kamera ein vor dem Fahrzeug liegender kurvenförmiger Straßenverlauf erfasst wird und die die gezielte Ausleuchtung eines in Blickrichtung des Fahrzeuglenkers liegenden Bereichs (kurz: Blickrichtungssteuerung) deaktiviert werden, um Ablenkungen des Fahrzeuglenkers vorzubeugen und den Fokus des Fahrzeuglenkers auf dem Kurvenverlauf zu halten. Eine solche Deaktivierung kann abhängig von der Fahrgeschwindigkeit des Fahrzeuges und/oder dem Kurvenradius erfolgen. Insbesondere kann eine solche Abschaltung für Geschwindigkeiten von über 30 km/h (oder über 50 km/h oder über 100 km/h) und/oder Kurvenradien von kleiner als 100m vorgesehen sein. Auch könnte der Quotient aus Fahrgeschwindigkeit und Kurvenradius als Indikator für eine Deaktivierung der Blickrichtungssteuerung herangezogen werden. Die Deaktivierung könnte beispielsweise bei Quotienten größer 3 (km/h)/m erfolgen (entsprechend einer Fahrgeschwindigkeit von 30 km/h bei einem Kurvenradius von 10m). Ebenso könnte die Querbeschleunigung als Indikator für eine Deaktivierung der Blickrichtungssteuerung dienen, die gemessen oder einfach errechnet werden kann, indem der Quotienten der Fahrgeschwindigkeit zum Quadrat geteilt durch den Kurvenradius gebildet wird. Eine Deaktivierung der Blickrichtungssteuerung könnte bei Querbeschleunigungen von über 0,1g, 0,2g oder 0,5g (g repräsentiert die Erdbeschleunigung - ca. 9,81 m/s²) erfolgen.

Um eine Blendung des Fahrzeuglenkers vorzubeugen, kann es vorgesehen sein, dass die Fahrzeugumgebung von zumindest einer Kamera erfasst wird, und die zumindest eine Recheneinheit die so erhaltene Information auswertet und in der Fahrzeugumgebung befindliche lichtreflektierende Objekte, insbesondere Verkehrsschilder, erkennt und die Intensität einer gezielten Ausleuchtung eines lichtreflektierenden Objektes abhängig von den Reflexionseigenschaften des lichtreflektierenden Objektes regelt. Blickt der Fahrzeuglenker auf ein lichtreflektierendes Objekt, so wird dieses Objekt mittels der Blickrichtungssteuerung angeleuchtet und die zu dem Fahrzeuglenker zurück reflektierte Lichtmenge, der Lichtstrom und/oder die Lichtintensität gemessen. Überschreitet die Lichtmenge, der Lichtstrom und/oder die Lichtintensität einen definierbaren Grenzwert, so kann die Intensität der gezielten Ausleuchtung reduziert werden.

Besonders günstig kann es sein, wenn die Fahrzeugumgebung von zumindest einer Kamera erfasst wird und die zumindest eine Recheneinheit die mittels der Kamera erhaltene Information auswertet und in der Fahrzeugumgebung befindliche Objekte, insbesondere bewegte Objekte hinsichtlich deren Verkehrsrelevanz anhand definierter Kriterien überprüft, wobei die Position eines jeweiligen Objektes mit der Blickrichtung des Fahrzeuglenkers verglichen wird und ergebnisabhängig von der Überprüfung des Objektes sowie dem Vergleich mit der Blickrichtung zumindest eine lichttechnische Maßnahme zur Lenkung der Aufmerksamkeit des Fahrzeuglenkers eingeleitet wird. Eine solche lichttechnische Maßnahme kann beispielsweise durch eine Wischlichtfunktion gegeben sein, bei ein Lichtkegel hin zu dem jeweiligen Objekt gelenkt wird. Dies erfolgt vorzugsweise durch das adaptive Beleuchtungsmittel. Als weitere lichttechnische Maßnahme kann z.B. durch ein wiederholtes Ein- und Ausschalten (z.B. pulsierend) des auf das jeweilige Objekt gerichteten Lichtkegels realisiert werden.

In einem zweiten Aspekt der Erfindung wird die oben gestellte Aufgabe mit einem Beleuchtungssystem zur Erzeugung einer adaptiven Lichtverteilung gemäß Anspruch 8 gelöst.

Die Recheneinheit bezieht dabei die die Blickrichtung betreffende Information von der zumindest einen Kamera (wie zuvor beschrieben). Das erfindungsgemäße Beleuchtungssystem erlaubt das Einbeziehen von Informationen über den Fahrzeuglenker (bzw. eine Interaktion mit dem Fahrzeuglenker) in eine vorgebbare Lichtverteilung, welche durch die zumindest eine Recheneinheit vorgegeben werden kann.

In einer besonders einfachen Ausbildung des erfindungsgemäßen Beleuchtungssystems weist das zumindest eine Beleuchtungsmittel eine horizontale und/oder vertikale Segmentierung auf. Diese Segmentierung kann beispielsweise bei Laserscheinwerfern durch die Ausrichtung eines einen Licht-/Laserstrahl reflektierenden und ausrichtenden Spiegels bzw. bei Matrix- oder Pixelscheinwerfern durch aktivieren einzelner Lichtquellen, welche somit einzelne Segmente des Lichtbildes erzeugen, erfolgen. Es kann daher auf bestehende Scheinwerfer- bzw. Beleuchtungssysteme in einfacher Weise zurückgegriffen werden.

In einer kostengünstigen Ausgestaltung des erfindungsgemäßen Beleuchtungssystems weist das Fahrzeug, insbesondere der zumindest eine Fahrzeugscheinwerfer, genau ein adaptives Beleuchtungsmittel auf. Bei den Fahrzeugscheinwerfern kann es sich beispielsweise um die Frontscheinwerfer handeln. Besonders vorteilhaft ist es dabei, wenn ein im Fahrzeugscheinwerfer bereits vorhandenes adaptives Beleuchtungsmittel durch die Recheneinheit zur gezielten Ausleuchtung des in Blickrichtung des Fahrzeuglenkers liegenden Bereichs angesteuert wird. So kann ein einziges in einem Fahrzeugscheinwerfer vorgesehenes adaptives Beleuchtungsmittel sowohl zur Erzeugung einer herkömmlichen als auch zur Erzeugung einer adaptiven Lichtverteilung herangezogen werden. Eine solche Variante ist besonders kosteneffizient. Alternativ dazu könnten auch zusätzlich zu dem adaptiven Beleuchtungsmittel weitere statische oder adaptive Beleuchtungsmittel vorgesehen sein, welche weitere Beleuchtungsfunktionen übernehmen könnten. Auch könnte die Recheneinheit erkannte Objekte markieren und weiterhin beleuchten, auch wenn sich der Blick des Fahrzeuglenkers von diesen Objekten abwendet. Des Weiteren ermöglicht das erfindungsgemäße Beleuchtungssystem eine gleichzeitige Beleuchtung von mehreren Objekten.

Um eine Blendung entgegenkommender Verkehrsteilnehmer zu vermeiden, kann in einer vorteilhaften Ausführungsform des erfindungsgemäßen Beleuchtungssystems vorgesehen sein, dass zumindest eine Kamera zur Erfassung der Fahrzeugumgebung eingerichtet ist, wobei die zumindest eine Recheneinheit zum Auswerten der so erhaltenen Information sowie zum Erkennen von in der Fahrzeugumgebung befindlichen Verkehrsteilnehmern eingerichtet ist, wobei erkannte Verkehrsteilnehmer nach definierten Kriterien selektiert sind und die gezielte Ausleuchtung der selektierten Verkehrsteilnehmer unterdrückbar ist.

Dabei ist zumindest eine Kamera zur Erfassung eines vor dem Fahrzeug liegenden kurvenförmigen Straßenverlaufs eingerichtet.

Besonders vorteilhaft kann es sein, wenn zumindest eine Kamera zur Erfassung der Fahrzeugumgebung eingerichtet ist, wobei die zumindest eine Recheneinheit zum Auswerten der so erhaltenen Information sowie zum Erkennen von in der Fahrzeugumgebung befindlichen Objekten, insbesondere Verkehrsschildern, eingerichtet ist, und die Intensität einer gezielten Ausleuchtung eines lichtreflektierenden Objektes abhängig von den Reflexionseigenschaften des lichtreflektierenden Objektes regelbar ist. Die Regelung der Intensität wurde bereits eingangs diskutiert.

Besonders günstig kann es sein, wenn zumindest eine Kamera zur Erfassung der Fahrzeugumgebung eingerichtet ist, wobei die zumindest eine Recheneinheit zum Auswerten der so erhaltenen Information sowie zum Erkennen und Überprüfen von in der Fahrzeugumgebung befindlichen Objekten, insbesondere bewegten Objekten, eingerichtet ist, wobei die Recheneinheit dazu eingerichtet ist die Position eines jeweiligen Objektes mit der Blickrichtung des Fahrzeuglenkers zu vergleichen und ergebnisabhängig von der Überprüfung des Objektes sowie dem Vergleich mit der Blickrichtung das zumindest eine adaptive Beleuchtungsmittel gezielt anzusteuern.

In einem dritten Aspekt der Erfindung weist ein Kraftfahrzeug zumindest ein erfindungsgemäßes Beleuchtungssystem auf. Vorzugsweise weist das Kraftfahrzeug zwei mit dem erfindungsgemäßen Beleuchtungssystem ausgestattete Frontscheinwerfer auf.

Die Erfindung samt weiteren Ausgestaltungen und Vorteilen ist im Folgenden an Hand einer beispielhaften, nicht einschränkenden Ausführungsform näher erläutert, die in den Figuren veranschaulicht ist. Hierbei zeigt
Fig. 1 eine schematische Darstellung eines erfindungsgemäßen Beleuchtungssystems und
Fig. 2 eine schematische Darstellung eines erfindungsgemäßen Verfahrens.

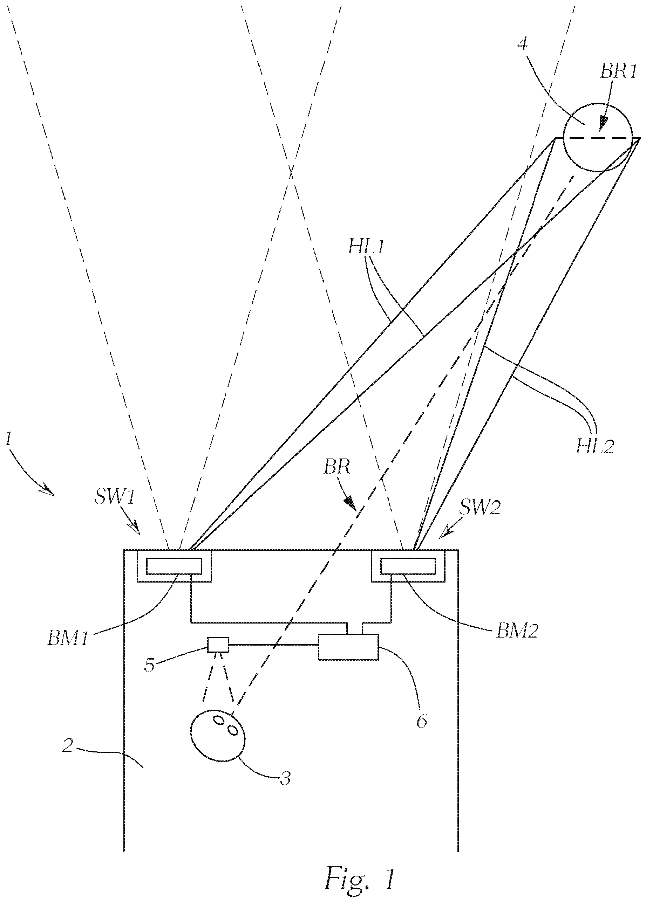

In Fig. 1 ist eine schematische Darstellung eines erfindungsgemäßen Beleuchtungssystems 1 in einer ersten Ausführungsform erkennbar. Darin ist eine Draufsicht auf einen vorderen Abschnitt eines Fahrzeugs 2, vorzugsweise eines Kraftfahrzeugs gezeigt, welches mit zwei Fahrzeugscheinwerfern SW1 und SW2 ausgestattet ist, die als Frontscheinwerfer ausgebildet sind. Innerhalb dieses Fahrzeugs 2 befindet sich ein Fahrzeuglenker 3, dessen Blickrichtung BR durch eine strichlierte Linie dargestellt ist, die sich von seinem Kopf hin zu einem betrachteten Objekt 4 erstreckt, welches beispielhaft einen in der Blickrichtung BR liegenden Bereich BR1 weitgehend ausfüllt. Als Blickrichtung BR wird insbesondere die physiologische Hauptsehrichtung des Fahrzeuglenkers 3 verstanden. Die Blickrichtung BR des Fahrzeuglenkers 3 wird über eine Kamera 5 (oder auch eine Mehrzahl an Kameras) erfasst, die vorzugsweise einen Gesichtsbereich des Fahrzeuglenkers 3 überwacht und insbesondere die Stellung seiner Augen bzw. deren Fixation detektiert. Hierfür geeignete Kameras 5 und zugehörige Software- und Hardwarekomponenten sind aus dem Stand der Technik hinreichend bekannt und werden häufig mit dem Ausdruck "Eye-Tracking" in Verbindung gebracht. Auch Kopfbewegungen (welche im Allgemeinen nicht mit der Blickrichtung BR gleichzusetzen sind) können durch die Kamera 5 erfasst und in weiterer Folge ausgewertet werden (zum Beispiel zur Erkennung von Ermüdungserscheinungen).

Die Kamera 5 ist mit einer Recheneinheit 6 verbunden, die die Blickrichtung betreffende Information von der Kamera 5 erhält, auswertet und basierend darauf Steuersignale erzeugt, die an adaptive Beleuchtungsmittel BM1 bzw. BM2 übertragen werden, welche in den Fahrzeugscheinwerfern SW1 bzw. SW2 angeordnet sind. Die adaptiven Beleuchtungsmittel BM1 bzw. BM2 sind dazu eingerichtet, die Steuersignale auszuwerten und einzelne Bereiche im Lichtbild der adaptiven Beleuchtungsmittel gezielt auszuleuchten oder auszublenden, wodurch eine gezielte Ausleuchtung des Objektes 4 erfolgen kann. Als adaptive Beleuchtungsmittel BM1 bzw. BM2 sind daher Beleuchtungsmittel mit einem segmentierten Lichtbild besonders gut geeignet. In der gezeigten Ausführungsform verfügt ein Fahrzeugsscheinwerfer SW1 bzw. SW2 über genau ein adaptives Beleuchtungsmittel BM1 bzw. BM2. Der in Blickrichtung BR liegende Bereich BR1 wird im gezeigten Beispiel durch beide Beleuchtungsmittel BM1 bzw. BM2 ausgeleuchtet. Die horizontale Komponente eines hierfür ausgeleuchteten Segments des jeweiligen Beleuchtungsmittels BM1 bzw. BM2 wird durch die Hilfslinien HL1 bzw. HL2 angedeutet, welche durch die Begrenzung der räumlichen Abmessungen des jeweiligen Segments bzw. der Eigenschaften des zugehörigen adaptiven Beleuchtungsmittels festgelegt sind und die Begrenzung des in der Blickrichtung BR liegenden Bereichs BR1 in horizontaler Richtung andeuten. Die vertikale Begrenzung dieses Bereichs BR1 erfolgt durch eine vertikale Segmentierung in analoger Weise.

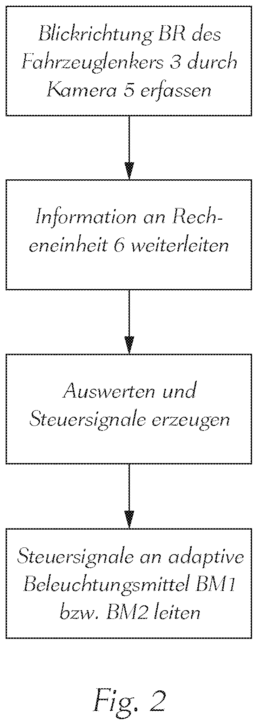

Fig. 2 zeigt eine schematische Darstellung eines erfindungsgemäßen Verfahrens, welches beispielsweise in dem Beleuchtungssystem 1 angewandt wird. Darin wird in einem ersten Schritt die Blickrichtung BR des Fahrzeuglenkers 3 durch die Kamera 5 erfasst. Diese Information wird an die zumindest eine Recheneinheit 6 geleitet, welche die Information auswertet und basierend darauf Steuersignale erzeugt und an die adaptiven Beleuchtungsmittel BM1 bzw. BM2 sendet. Die adaptiven Beleuchtungsmittel BM1 bzw. BM2 setzen die Steuersignale um, indem diese den in Blickrichtung BR des Fahrzeuglenkers 3 liegenden Bereich BR1 gezielt ausleuchten. Die gezielte Ausleuchtung dieses Bereichs BR1 erfolgt im Allgemeinen zusätzlich zu anderen Lichtfunktionen, die von den adaptiven Beleuchtungsmitteln BM1 bzw. BM2 übernommen werden können. So können die adaptiven Beleuchtungsmittel ebenso zum Erzeugen einer Abblendlicht- oder einer Fernlichtverteilung eingerichtet sein. Auch können Funktionen zur automatischen Erkennung und Ausleuchtung von in der Fahrzeugumgebung befindlichen Objekten und/oder eine gezieltes Ausleuchten oder Ausblenden anderer Verkehrsteilnehmer implementiert werden. Dabei können hierarchische Gliederungen vorgesehen sein. Beispielsweise kann das Ausblenden entgegenkommender Verkehrsteilnehmer Vorrang vor einem gezielten Ausleuchten des in Blickrichtung BR des Fahrzeuglenkers 3 liegenden Bereiches BR1 haben, sodass für den Fall, in welchem der Fahrzeuglenker 3 in Richtung des entgegenkommenden Verkehrsteilnehmers blickt, eine Ausleuchtung dieses Bereichs BR1 unterdrückt wird. Die Erfassung der Fahrzeugumgebung erfolgt dabei vorzugsweise durch eine zusätzliche Kamera, welche beispielsweise mit einer zusätzlichen Recheneinheit zur Auswertung der die Fahrzeugumgebung betreffenden Information verbunden sein kann. Die in der Fahrzeugumgebung befindlichen Verkehrsteilnehmer können mithilfe von bekannten Bildverarbeitungsalgorithmen erkannt werden. Die Selektion der Verkehrsteilnehmer kann dergestalt erfolgen, dass beispielsweise entgegenkommende Verkehrsteilnehmer erkannt und ausgeblendet werden. Als Kriterien können hierfür beispielsweise Bewegungen der erkannten Verkehrsteilnehmer und/oder Lage der Verkehrsteilnehmer (z.B. in einem in Bezug auf die Fahrtrichtung des Fahrzeugs 2 linken Bildbereich oder einer linken Bildhälfte der mithilfe einer Kamera erfassten Fahrzeugumgebung) herangezogen werden.

Der technische Aufbau des beschriebenen Beleuchtungssystems 1 kann natürlich in beliebiger dem Fachmann naheliegender Weise abgeändert werden. So kann beispielsweise die Recheneinheit 6 einen integralen Bestandteil der Kamera 5 bilden. Auch könnte die Recheneinheit 6 dem Scheinwerfer SW1 bzw. SW2 zugeordnet sein. Des Weiteren könnte das erfindungsgemäße Verfahren in einfacher Weise abgeändert oder adaptiert werden, indem beispielsweise der zeitliche Verlauf der Blickrichtung BR gespeichert wird und in der Blickrichtung BR gelegene Objekte weiterhin beleuchtet werden, auch wenn sich die Blickrichtung BR danach von den Objekten abwendet.

## Patentansprüche

1. Verfahren zum Erzeugen einer adaptiven Lichtverteilung, die in einem von einem Fahrzeuglenker (3) lenkbaren Fahrzeug (2) von zumindest einem Fahrzeugscheinwerfer (SW1, SW2) erzeugt wird, wobei der zumindest eine Fahrzeugscheinwerfer (SW1, SW2) zumindest ein adaptives Beleuchtungsmittel (BM1, BM2) aufweist, wobei
- zumindest eine Kamera (5) die Blickrichtung (BR) des Fahrzeuglenkers erfasst,
- zumindest eine Recheneinheit (6) die so erhaltene Information auswertet und basierend darauf Steuersignale erzeugt und
- die Steuersignale an den zumindest einen Fahrzeugscheinwerfer (SW1, SW2) mit dem zumindest einen adaptives Beleuchtungsmittel (BM1, BM2) übermittelt werden,
und wobei das zumindest eine adaptive Beleuchtungsmittel (BM1, BM2) entsprechend den Steuersignalen zur gezielten Ausleuchtung eines in Blickrichtung (BR) des Fahrzeuglenkers (3) liegenden Bereichs (BR1) gesteuert wird, **dadurch gekennzeichnet, dass** die Fahrzeugumgebung von zumindest einer Kamera (5) erfasst wird, und die zumindest eine Recheneinheit (6) die so erhaltene Information auswertet und in der Fahrzeugumgebung befindliche Verkehrsteilnehmer erkennt und nach definierten Kriterien selektiert, wobei zumindest die gezielte Ausleuchtung der selektierten Verkehrsteilnehmer unterdrückt wird, wobei mittels der zumindest einen Kamera (5) ein vor dem Fahrzeug (2) liegender kurvenförmiger Straßenverlauf erfasst wird, wobei eine Deaktivierung der gezielte Ausleuchtung eines in Blickrichtung des Fahrzeuglenkers (3) liegenden Bereichs abhängig von der Fahrgeschwindigkeit des Fahrzeuges und/oder dem Kurvenradius erfolgt.

2. Verfahren nach Anspruch 1, **dadurch gekennzeichnet, dass** die adaptive Lichtverteilung durch eine horizontale und/oder vertikale Segmentierung des Lichtbildes des zumindest einen Beleuchtungsmittels (BM1, BM2) erzeugt wird.

3. Verfahren nach Anspruch 1 oder 2, **dadurch gekennzeichnet, dass** die adaptive Lichtverteilung aus den Lichtbildern zweier Fahrzeugscheinwerfer (SW1, SW2), die jeweils zumindest ein adaptives Beleuchtungsmittel (BM1, BM2) aufweisen, zusammengesetzt wird.

4. Verfahren nach Anspruch 1 oder 2, **dadurch gekennzeichnet, dass** die adaptive Lichtverteilung aus den Lichtbildern zweier Fahrzeugscheinwerfer (SW1, SW2), die jeweils genau ein adaptives Beleuchtungsmittel (BM1, BM2) aufweisen, zusammengesetzt wird.

5. Verfahren nach einem der Ansprüche 1 bis 4, **dadurch gekennzeichnet, dass** die adaptive Lichtverteilung durch zumindest zwei adaptive Beleuchtungsmittel (BM1, BM2) erzeugt wird, die unabhängig voneinander gesteuert werden.

6. Verfahren nach einem der Ansprüche 1 bis 5, **dadurch gekennzeichnet, dass** die Fahrzeugumgebung von zumindest einer Kamera (5) erfasst wird, und die zumindest eine Recheneinheit (6) die so erhaltene Information auswertet und in der Fahrzeugumgebung befindliche lichtreflektierende Objekte, insbesondere Verkehrsschilder, erkennt und die Intensität einer gezielten Ausleuchtung eines lichtreflektierenden Objektes abhängig von den Reflexionseigenschaften des lichtreflektierenden Objektes regelt.

7. Verfahren nach einem der Ansprüche 1 bis 6, **dadurch gekennzeichnet, dass** die Fahrzeugumgebung von zumindest einer Kamera (5) erfasst wird und die zumindest eine Recheneinheit (6) die mittels der Kamera (5) erhaltene Information auswertet und in der Fahrzeugumgebung befindliche Objekte, insbesondere bewegte Objekte, hinsichtlich deren Verkehrsrelevanz anhand definierter Kriterien überprüft, wobei die Position eines jeweiligen Objektes mit der Blickrichtung des Fahrzeuglenkers (3) verglichen wird und ergebnisabhängig von der Überprüfung des Objektes sowie dem Vergleich mit der Blickrichtung zumindest eine lichttechnisch Maßnahme zur Lenkung der Aufmerksamkeit des Fahrzeuglenkers eingeleitet wird.

8. Beleuchtungssystem (1) zur Erzeugung einer adaptiven Lichtverteilung, die in einem von einem Fahrzeuglenker (3) gelenkten Fahrzeug (2) von zumindest einem Fahrzeugscheinwerfer (SW1, SW2) erzeugt wird, wobei der zumindest eine Fahrzeugscheinwerfer (SW1, SW2) zumindest ein adaptives Beleuchtungsmittel (BM1, BM2) aufweist, wobeizumindest eine Kamera (5) zum Erfassen der Blickrichtung (BR) des Fahrzeuglenkers eingerichtet ist, wobei das zumindest eine adaptive Beleuchtungsmittel (BM1, BM2) durch zumindest eine Recheneinheit (6) zur gezielten Ausleuchtung eines in Blickrichtung (BR) des Fahrzeuglenkers (3) liegenden Bereichs (BR1) steuerbar ist, **dadurch gekennzeichnet, dass** zumindest eine Kamera (5) zur Erfassung der Fahrzeugumgebung eingerichtet ist, wobei die zumindest eine Recheneinheit (6) zum Auswerten der so erhaltenen Information sowie zum Erkennen von in der Fahrzeugumgebung befindlichen Verkehrsteilnehmern eingerichtet ist, wobei erkannte Verkehrsteilnehmer nach definierten Kriterien selektiert sind und die gezielte Ausleuchtung der selektierten Verkehrsteilnehmer unterdrückbar ist, wobei zumindest eine Kamera (5) zur Erfassung eines vor dem Fahrzeug (2) liegenden kurvenförmigen Straßenverlaufs eingerichtet ist, wobei eine Deaktivierung der gezielte Ausleuchtung eines in Blickrichtung des Fahrzeuglenkers (3) liegenden Bereichs abhängig von der Fahrgeschwindigkeit des Fahrzeuges und/oder dem Kurvenradius erfolgt.

9. Beleuchtungssystem (1) nach Anspruch 8, **dadurch gekennzeichnet, dass** das zumindest eine Beleuchtungsmittel (BM1, BM2) eine horizontale und/oder vertikale Segmentierung aufweist.

10. Beleuchtungssystem (1) nach Anspruch 8 oder 9, **dadurch gekennzeichnet, dass** das Fahrzeug (2), insbesondere der zumindest eine Fahrzeugscheinwerfer (SW1, SW2) genau ein adaptives Beleuchtungsmittel (BM1, BM2) aufweist.

11. Beleuchtungssystem (1) nach einem der Ansprüche 8 bis 10, **dadurch gekennzeichnet, dass** zumindest eine Kamera (5) zur Erfassung der Fahrzeugumgebung eingerichtet ist, wobei die zumindest eine Recheneinheit (6) zum Auswerten der so erhaltenen Information sowie zum Erkennen von in der Fahrzeugumgebung befindlichen Objekten, insbesondere Verkehrsschildern, eingerichtet ist, und die Intensität einer gezielten Ausleuchtung eines lichtreflektierenden Objektes abhängig von den Reflexionseigenschaften des lichtreflektierenden Objektes regelbar ist.

12. Beleuchtungssystem (1) nach einem der Ansprüche 8 bis 11, **dadurch gekennzeichnet, dass** zumindest eine Kamera (5) zur Erfassung der Fahrzeugumgebung eingerichtet ist, wobei die zumindest eine Recheneinheit (6) zum Auswerten der so erhaltenen Information sowie zum Erkennen und Überprüfen von in der Fahrzeugumgebung befindlichen Objekten, insbesondere bewegten Objekten, eingerichtet ist, wobei die Recheneinheit dazu eingerichtet ist die Position eines jeweiligen Objektes mit der Blickrichtung des Fahrzeuglenkers (3) zu vergleichen und ergebnisabhängig von der Überprüfung des Objektes sowie dem Vergleich mit der Blickrichtung das zumindest eine adaptive Beleuchtungsmittel (BM1, BM2) gezielt anzusteuern.

13. Kraftfahrzeug mit zumindest einem Beleuchtungssystem (1) nach einem der vorangegangenen Ansprüche.

14. Kraftfahrzeug nach Anspruch 13, **dadurch gekennzeichnet, dass** das Kraftfahrzeug zwei mit dem Beleuchtungssystem (1) ausgestattete Frontscheinwerfer aufweist.

## Claims

1. Method for generating an adaptive light distribution which is generated by at least one vehicle headlamp (SW1, SW2) in a vehicle (2) which can be steered by a vehicle driver (3), the at least one vehicle headlamp (SW1, SW2) having at least one adaptive lighting means (BM1, BM2), wherein
- at least one camera (5) detects the viewing direction (BR) of the vehicle driver,
- at least one computing unit (6) evaluates the information thus obtained and generates control signals based thereon, and
- the control signals are transmitted to the at least one vehicle headlamp (SW1, SW2) with the at least one adaptive lighting means (BM1, BM2),
and wherein the at least one adaptive lighting means (BM1, BM2) is controlled in accordance with the control signals for the targeted illumination of an area (BR1) lying in the viewing direction (BR) of the driver (3) of the vehicle, **characterized in that** the vehicle surroundings are detected by at least one camera (5), and the at least one computing unit (6) evaluates the information thus obtained and recognizes road users located in the vehicle surroundings and selects them according to defined criteria, wherein at least the targeted illumination of the selected road users is suppressed, wherein a curved road course lying in front of the vehicle (2) is detected by means of the at least one camera (5), wherein the targeted illumination of an area lying in the viewing direction of the vehicle driver (3) is deactivated as a function of the driving speed of the vehicle and/or the curve radius.

2. Method according to claim 1, **characterized in that** the adaptive light distribution is generated by horizontal and/or vertical segmentation of the light image of the at least one lighting means (BM1, BM2).

3. Method according to claim 1 or 2, **characterized in that** the adaptive light distribution is composed of the light images of two vehicle headlights (SW1, SW2) which each have at least one adaptive lighting means (BM1, BM2).

4. Method according to claim 1 or 2, **characterized in that** the adaptive light distribution is composed of the light images of two vehicle headlights (SW1, SW2) which each have exactly one adaptive lighting means (BM1, BM2).

5. Method according to one of claims 1 to 4, **characterized in that** the adaptive light distribution is generated by at least two adaptive lighting means (BM1, BM2) which are controlled independently of one another.

6. Method according to one of claims 1 to 5, **characterized in that** the vehicle environment is detected by at least one camera (5), and the at least one computing unit (6) evaluates the information thus obtained and detects light-reflecting objects located in the vehicle environment, in particular traffic signs, and regulates the intensity of a targeted illumination of a light-reflecting object depending on the reflection properties of the light-reflecting object.

7. Method according to one of claims 1 to 6, **characterized in that** the vehicle environment is detected by at least one camera (5) and the at least one computing unit (6) evaluates the information obtained by means of the camera (5) and detects objects located in the vehicle environment, in particular moving objects, with regard to their traffic relevance on the basis of defined criteria, the position of a respective object being compared with the line of vision of the vehicle driver (3), and at least one lighting measure for directing the attention of the vehicle driver being initiated as a function of the result of the examination of the object and the comparison with the line of vision.

8. Lighting system (1) for generating an adaptive light distribution which is generated by at least one vehicle headlamp (SW1, SW2) in a vehicle (2) driven by a vehicle driver (3), the at least one vehicle headlamp (SW1, SW2) having at least one adaptive lighting means (BM1, BM2), at least one camera (5) being set up to detect the viewing direction (BR) of the vehicle driver, the at least one adaptive lighting means (BM1, BM2) being controllable by at least one computing unit (6) for the targeted illumination of an area (BR1) lying in the viewing direction (BR) of the vehicle driver (3), **characterized in that** at least one camera (5) is set up for detecting the vehicle surroundings, the at least one computing unit (6) being set up for evaluating the information thus obtained and for recognizing road users located in the vehicle surroundings, recognized road users being selected according to defined criteria and the targeted illumination of the selected road users being suppressible, wherein at least one camera (5) is set up to detect a curved road course lying in front of the vehicle (2), wherein deactivation of the targeted illumination of an area lying in the viewing direction of the vehicle driver (3) takes place as a function of the driving speed of the vehicle and/or the radius of the curve.

9. Lighting system (1) according to claim 8, **characterized in that** the at least one lighting means (BM1, BM2) has a horizontal and/or vertical segmentation.

10. Lighting system (1) according to claim 8 or 9, **characterized in that** the vehicle (2), in particular the at least one vehicle headlamp (SW1, SW2) has precisely one adaptive lighting means (BM1, BM2).

11. Lighting system (1) according to one of claims 8 to 10, **characterized in that** at least one camera (5) is set up to detect the vehicle environment, the at least one computing unit (6) being set up to evaluate the information thus obtained and to recognize objects located in the vehicle environment, in particular traffic signs, and the intensity of a targeted illumination of a light-reflecting object being controllable as a function of the reflection properties of the light-reflecting object.

12. Lighting system (1) according to one of claims 8 to 11, **characterized in that** at least one camera (5) is set up to detect the vehicle environment, the at least one computing unit (6) being set up to evaluate the information thus obtained and to detect and check objects located in the vehicle environment, the at least one computing unit (6) being set up for evaluating the information thus obtained and for recognizing and checking objects, in particular moving objects, located in the vehicle environment, the computing unit being set up for comparing the position of a respective object with the line of vision of the vehicle driver (3) and for selectively actuating the at least one adaptive lighting means (BM1, BM2) as a function of the result of the checking of the object and the comparison with the line of vision.

13. Motor vehicle with at least one lighting system (1) according to one of the preceding claims.

14. Motor vehicle according to claim 13, **characterized in that** the motor vehicle has two front headlights equipped with the lighting system (1).

## Revendications

1. Procédé pour générer une répartition adaptative de la lumière, qui est générée dans un véhicule (2) pouvant être dirigé par un conducteur de véhicule (3) par au moins un projecteur de véhicule (SW1, SW2), le au moins un projecteur de véhicule (SW1, SW2) présentant au moins un moyen d'éclairage adaptatif (BM1, BM2), dans lequel
- au moins une caméra (5) détecte la direction du regard (BR) du conducteur du véhicule,
- au moins une unité de calcul (6) évalue les informations ainsi obtenues et génère des signaux de commande sur la base de ces informations et
- les signaux de commande sont transmis à l'au moins un projecteur de véhicule (SW1, SW2) avec l'au moins un moyen d'éclairage adaptatif (BM1, BM2),
et l'au moins un moyen d'éclairage adaptatif (BM1, BM2) étant commandé en fonction des signaux de commande pour l'éclairage ciblé d'une zone (BR1) située dans la direction de vision (BR) du conducteur du véhicule (3), **caractérisé en ce que** l'environnement du véhicule est saisi par au moins une caméra (5) et l'au moins une unité de calcul (6) évalue l'information ainsi obtenue et reconnaît les usagers de la route se trouvant dans l'environnement du véhicule et les sélectionne selon des critères définis, au moins l'éclairage ciblé des usagers de la route sélectionnés étant supprimé, un tracé de route en forme de courbe situé devant le véhicule (2) étant détecté au moyen de la au moins une caméra (5), une désactivation de l'éclairage ciblé d'une zone située dans la direction du regard du conducteur du véhicule (3) étant effectuée en fonction de la vitesse de déplacement du véhicule et/ou du rayon de courbure.

2. Procédé selon la revendication 1, **caractérisé en ce que** la répartition adaptative de la lumière est générée par une segmentation horizontale et/ou verticale de l'image lumineuse d'au moins un moyen d'éclairage (BM1, BM2).

3. Procédé selon la revendication 1 ou 2, **caractérisé en ce que** la répartition adaptative de la lumière est composée des images lumineuses de deux phares de véhicule (SW1, SW2), qui présentent chacun au moins un moyen d'éclairage adaptatif (BM1, BM2).

4. Procédé selon la revendication 1 ou 2, **caractérisé en ce que** la répartition adaptative de la lumière est composée des images lumineuses de deux phares de véhicule (SW1, SW2), qui présentent chacun exactement un moyen d'éclairage adaptatif (BM1, BM2).

5. Procédé selon l'une des revendications 1 à 4, **caractérisé en ce que** la répartition adaptative de la lumière est générée par au moins deux moyens d'éclairage adaptatifs (BM1, BM2) qui sont commandés indépendamment l'un de l'autre.

6. Procédé selon l'une des revendications 1 à 5, **caractérisé en ce que** l'environnement du véhicule est détecté par au moins une caméra (5), et l'au moins une unité de calcul (6) évalue l'information ainsi obtenue et détecte les objets réfléchissant la lumière, en particulier les panneaux de signalisation, situés dans l'environnement du véhicule, et règle l'intensité d'un éclairage ciblé d'un objet réfléchissant la lumière en fonction des propriétés de réflexion de l'objet réfléchissant la lumière.

7. Procédé selon l'une des revendications 1 à 6, **caractérisé en ce que** l'environnement du véhicule est saisi par au moins une caméra (5) et l'au moins une unité de calcul (6) évalue l'information obtenue au moyen de la caméra (5) et détecte les objets se trouvant dans l'environnement du véhicule, en particulier les objets en mouvement, en ce qui concerne leur pertinence pour le trafic à l'aide de critères définis, la position d'un objet respectif étant comparée à la direction du regard du conducteur du véhicule (3) et, en fonction du résultat de la vérification de l'objet ainsi que de la comparaison avec la direction du regard, au moins une mesure de technique d'éclairage étant déclenchée pour guider l'attention du conducteur du véhicule.

8. Système d'éclairage (1) pour générer une répartition adaptative de la lumière qui est générée par au moins un projecteur de véhicule (SW1, SW2) dans un véhicule (2) conduit par un conducteur de véhicule (3), l'au moins un projecteur de véhicule (SW1, SW2) présentant au moins un moyen d'éclairage adaptatif (BM1, BM2), au moins une caméra (5) étant aménagée pour détecter la direction du regard (BR) du conducteur de véhicule, l'au moins un moyen d'éclairage adaptatif (BM1, BM2) pouvant être commandé par au moins une unité de calcul (6) pour éclairer de manière ciblée une zone (BR1) située dans la direction du regard (BR) du conducteur (3) du véhicule,**caractérisé en ce qu'**au moins une caméra (5) est conçue pour détecter l'environnement du véhicule, l'au moins une unité de calcul (6) étant conçue pour évaluer l'information ainsi obtenue et pour reconnaître des usagers de la route se trouvant dans l'environnement du véhicule, les usagers de la route reconnus étant sélectionnés selon des critères définis et l'éclairage ciblé des usagers de la route sélectionnés pouvant être supprimé, au moins une caméra (5) étant aménagée pour détecter un tracé de route en forme de virage situé devant le véhicule (2), une désactivation de l'éclairage ciblé d'une zone située dans la direction du regard du conducteur du véhicule (3) s'effectuant en fonction de la vitesse de déplacement du véhicule et/ou du rayon de courbure.

9. Système d'éclairage (1) selon la revendication 8, **caractérisé en ce que** le au moins un moyen d'éclairage (BM1, BM2) présente une segmentation horizontale et/ou verticale.

10. Système d'éclairage (1) selon la revendication 8 ou 9, **caractérisé en ce que** le véhicule (2), en particulier l'au moins un projecteur de véhicule (SW1, SW2), présente exactement un moyen d'éclairage adaptatif (BM1, BM2).

11. Système d'éclairage (1) selon l'une des revendications 8 à 10, **caractérisé en ce qu'**au moins une caméra (5) est agencée pour détecter l'environnement du véhicule, l'au moins une unité de calcul (6) étant agencée pour évaluer les informations ainsi obtenues et pour reconnaître des objets, en particulier des panneaux de signalisation, se trouvant dans l'environnement du véhicule, et l'intensité d'un éclairage ciblé d'un objet réfléchissant la lumière pouvant être réglée en fonction des propriétés de réflexion de l'objet réfléchissant la lumière.

12. Système d'éclairage (1) selon l'une des revendications 8 à 11, **caractérisé en ce qu'**au moins une caméra (5) est agencée pour détecter l'environnement du véhicule, l'au moins une unité de calcul (6) étant destinée à évaluer les informations ainsi obtenues ainsi qu'à reconnaître et à vérifier des objets se trouvant dans l'environnement du véhicule, en particulier des objets en mouvement, l'unité de calcul étant conçue pour comparer la position d'un objet respectif avec la direction du regard du conducteur du véhicule (3) et pour commander de manière ciblée l'au moins un moyen d'éclairage adaptatif (BM1, BM2) en fonction du résultat de la vérification de l'objet et de la comparaison avec la direction du regard.

13. Véhicule automobile avec au moins un système d'éclairage (1) selon l'une des revendications précédentes.

14. Véhicule automobile selon la revendication 13, **caractérisé en ce que** le véhicule automobile présente deux phares avant équipés du système d'éclairage (1).
